(19) Europäisches Patentamt
European Patent Office
Office européen des brevets

(11) **EP 4 299 358 A1**

(12) # EUROPEAN PATENT APPLICATION

(43) Date of publication:
**03.01.2024 Bulletin 2024/01**

(21) Application number: **22181756.2**

(22) Date of filing: **29.06.2022**

(51) International Patent Classification (IPC):
**B60L 7/10** (2006.01)   **B60L 53/67** (2019.01)
**B60L 58/15** (2019.01)

(52) Cooperative Patent Classification (CPC):
**B60L 7/10; B60L 53/67; B60L 58/15;**
B60L 2240/62; B60L 2240/642; B60L 2260/50

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **VOLVO TRUCK CORPORATION
405 08 Göteborg (SE)**

(72) Inventor: **ISAKSSON, Björn
45993 LJUNGSKILE (SE)**

(74) Representative: **Kransell & Wennborg KB
P.O. Box 2096
403 12 Göteborg (SE)**

(54) **A METHOD FOR CHARGING AN ELECTRIC VEHICLE IN A CHARGING STATION SYSTEM**

(57)    The present invention relates to a method for charging an electric vehicle (1) in a charging station system (100) comprising a plurality of charging stations (200, 201, 202, 203) separated by predetermined routes (300, 301, 302) with known topography. The method comprises: performing (S10) a charging event of a battery (3) of the electric vehicle (1) using an external power source (201A) at a first charging station (201); stopping (S12) the charging event at a predetermined charging level (1000) below the nominally fully charged level (1002), the predetermined charging level (1000) being set to correspond to the predicted battery regeneration when driving the electric vehicle along a predetermined route (301) from the first charging station (201) to a second charging station (202).

Fig. 1

EP 4 299 358 A1

**Description**

TECHNICAL FIELD

The present invention relates to a method for charging an electric vehicle in a charging station system. The invention further relates to a charging station system comprising a plurality of charging stations, a charging station of a charging station system, a computer program and a computer readable medium carrying a computer program.

The invention may be applied to any electrically operated heavy-duty vehicles, such as trucks, buses and construction equipment, passenger cars, etc. It is applicable for fully electrically operated vehicles as well as for hybrid vehicles, comprising also a combustion engine.

BACKGROUND

A vehicle typically comprises an engine for propelling the vehicle. The engine may be powered by various means, such as e.g. by liquid or gaseous fuel in an internal combustion engine, or by electric power in an electric machine. Moreover, hybrid solutions exist in which the vehicle is propelled both by an internal combustion engine and an electric machine. In either way, energy storage devices are used to store the energy needed in order to operate the engine for propelling the vehicle. For electrical vehicles, a battery, e.g. comprised in a battery system, may be used to power the electric machine, which battery periodically needs to be charged.

One common solution to charge the battery of the electric vehicle is at a charging station by using a power transmitter connected to an external power source, such as e.g. a power grid, by an electrical wire. Typically, the electric vehicle is parked at the charging station, e.g. in a parking/charging spot providing such charging capabilities, and the driver or other personnel manually plug the power transmitter, e.g. a plug, into a power receiver, e.g. a socket of the vehicle. The socket is in electrical communication with the battery for enabling charging of the same. Another solution to charge the battery of the electric vehicle is by a wireless charging system. The wireless charging system typically includes a charging station having a power emitting coil, or transmission coil, configured to emit electromagnetic radiation. The wireless charging system typically further comprises a power receiving coil, preferably arranged on the electrical vehicle and in electrical communication with the battery, and being configured to receive the emitted electromagnetic radiation for charging the battery.

After the battery of the electric vehicle has been charged, the electric vehicle typically drives away from the charging station eventually resulting in a renewed need for charging. The electric vehicle may comprise a regenerative braking system configured to transfer the kinetic energy of the vehicle into stored energy by charging of the battery as the electric vehicle brakes or slows down. Hereby, the range of electric vehicle may be extended, and the need for charging at a charging station postponed. However, in case the battery regeneration, i.e. the charging of the battery by the regenerative braking system, results in a nominally fully charged battery, further charging may damage the battery. In such cases, the kinetic energy of the vehicle, as the vehicle brakes or slows down, must be discarded by other means than the battery regeneration. For example, a resistor can be used to consume the produced electricity from the regenerative braking system. However, such resistor is heated and must typically be cooled. Both the resistor and the means needed for cooling the resistor adds costs and/or results in wasting of energy.

SUMMARY

It is an object of the present disclosure to at least to some extent alleviate the shortcomings discussed above in relation to known charging of electric vehicles, and to improve a method for charging an electric vehicle at a charging station.

According to at least a first aspect of the present invention, a method for charging an electric vehicle in a charging station system comprising a plurality of charging stations separated by predetermined routes with known topography, each one of the charging stations being located at a known altitude above sea level, the electric vehicle having a known weight and a pre-determined regeneration efficiency, is provided. The method comprises:

- performing a charging event of a battery of the electric vehicle using an external power source at a first charging station;
- stopping the charging event at a predetermined charging level below the nominally fully charged level, the predetermined charging level being set to correspond to the predicted battery regeneration when driving the electric vehicle along a predetermined route from the first charging station to a second charging station, wherein the predicted battery regeneration is determined by at least the known altitude of the first charging station, the known topography of the predetermined route between the first and second charging stations, the weight of the electric vehicle and the pre-determined regeneration efficiency of the electric vehicle.

Hereby, a simply yet effective method for charging an electric vehicle is provided. By stopping the charging event at the predetermined charging level below the nominally fully charged level, the battery of the electric vehicle can be charged by regeneration during travelling along the predetermined route between the first and second charging stations. Thus, the various charging of the battery of the electrical vehicle may be improved or optimized. In particular, by stopping the charging event at a predetermined charging level below the nominally fully charged level, and wherein the predetermined charging level is set to correspond to the predicted battery regeneration when driving the electric vehicle along the predetermined route from the first charging station to a second charging station, an improved utilization of the battery while minimizing (or avoiding) the need to dispose the regenerative energy by other means than charging the battery is provided.

By determining the predicted battery regeneration by at least the known altitude of the first charging station, the known topography of the predetermined route between the first and second charging stations, the weight of the electric vehicle and the pre-determined regeneration efficiency of the electric vehicle, there is a reduced need, or in some cases no need, to acquire sensitive data from the vehicle, such as route planning or scheduled destinations. As the charging stations are separated by predetermined routes, the route between the first and second charging station is a predetermined route, and may be referred to as a first route or as a predetermined first route. That the routes are predetermined means that the routes are known on beforehand, i.e. determined on beforehand, with known topography. Thus, the predetermined routes are predetermined independently of the travel of the electrical vehicle.

According to at least one example embodiment, the step of stopping the charging event at a predetermined charging level below the nominally fully charged level is determined by means of a charging function. The charging function is an algorithm determining the predetermined charging level using input data corresponding to the predicted battery regeneration when driving the electric vehicle along a predetermined route from the first charging station to a second charging station, wherein the input data comprises at least the known altitude of the first charging station, the known topography of the predetermined route between the first and second charging stations, the weight of the electric vehicle and the pre-determined regeneration efficiency of the electric vehicle. The battery regeneration (as work in units Joule) may e.g. be calculated using equation 1:

$$\text{Altitude change (m)} * \text{vehicle weight (kg)} * 9.81 \text{ (m/s}^2) * \text{regeneration efficiency (1)}$$

The altitude change is thus determined by the known altitude of the first charging station and the known topography of the predetermined route between the first and second charging stations. The vehicle weight may be referred to as the mass of the vehicle. Equation 1 can easily be transformed into the unit power (J/s) by applying it over a time interval.

According to at least one example embodiment, the charging stations of the charging station system is a predetermined set of charging stations separated by predetermined routes. Thus, the previously mentioned first and second charging stations are charging stations within the predetermined set of charging stations of the charging station system.

Typically, the external power source at the first charging station is located at a higher altitude (i.e. at a higher elevation compared to sea level) than some point along the predetermined route between the first and second charging stations. Thus, when driving the electric vehicle along the predetermined route from the first charging station to the second charging station, the battery of the vehicle will be charged by regeneration at least prior to reaching the point along the predetermined route which is located at a lower altitude than external power source at the first charging station.

According to at least one example embodiment, the predicted battery regeneration is determined as the most limiting battery regeneration of the battery of the electric vehicle occurring somewhere along the predetermined route between the first and second charging stations.

The most limiting battery regeneration is the battery regeneration predicted to result in the highest charge of the battery occurring somewhere along the predetermined route between the first and second charging stations. Typically, such limiting battery regeneration is occurring relatively close to the first charging station, and/or at the first downhill (or first larger downhill), as the battery here is more likely to be at a high charge.

According to at least one example embodiment, the most limiting battery regeneration of the battery of the electric vehicle along the predetermined route between the first and second charging stations is determined to a point along the predetermined route at which the battery of the electric vehicle is predicted to be nominally fully charged.

Thus, the most limiting battery regeneration is the battery regeneration predicted to result in a nominally fully charged battery occurring somewhere along the predetermined route between the first and second charging stations. In other word, the step of stopping the charging event at a predetermined charging level is performed such that the battery is charged to a level in which the available charge storage corresponds to a predicted amount of charge generated by battery regeneration when driving the electric vehicle along the predetermined route between the first and second charging stations.

For example, when determining the most limiting battery regeneration, a cumulative power regeneration along the predetermined route between the first and second charging stations is used. Thus, the cumulative regeneration along the predetermined route up to the point along the route at which the battery of the electric vehicle is predicted to be nominally fully charged may be included in the determination of the most limiting battery regeneration. The cumulative regeneration may preferably include prediction of the power that will be consumed by the electric vehicle when driving along the predetermined route between the first and second charging stations. The predicted power consumption may depend on weather, traffic conditions, etc well known to a person skilled in the art. A predictive power algorithm may be utilized to predict the power consumption the cumulative regeneration. The cumulative regeneration may thus be based on the predicted power or energy consumed by the electric vehicle when driving along the predetermined route, as well as the predicted power or energy generated by the battery regeneration and charged to the battery. In other words, the electric vehicle will store (by charging) electricity and utilize electricity when driving along the predetermined route from the first charging station to the second charging station.

According to at least one example embodiment, the predetermined charging level is determined off-board the electric vehicle.

Hereby, the charging event and the stopping of the charging event can be determined off-board the electric vehicle, and data communication with the electric vehicle can be kept to a minimum, or even be omitted. For example, as will be described in detail later, both the weight and the pre-determined regeneration efficiency of the electric vehicle can be determined off-board the electric vehicle, for example by identification of the vehicle type and utilizing a look-up table with known vehicle data, and/or by retrieving such info by simply performing a weight estimate of the electric vehicle and using a default regeneration efficiency.

According to at least one example embodiment, the predetermined charging level is determined by a control unit at the first charging station.

According to at least one example embodiment, the method further comprises

- retrieving the weight and the pre-determined regeneration efficiency of the electric vehicle, by the control unit of the charging station.

Hereby, a simply yet effective means for determining the predetermined charging level off-board the vehicle is provided. For example, the previously mentioned identification of the vehicle type and utilization of a look-up table with known vehicle data may be used. Moreover, the previously mentioned weight estimate of the electric vehicle may be used, e.g. by measuring the weight of the electric vehicle by a weight sensor installed at the first charging station. As a further alternative, the electric vehicle may provide the control unit of the charging station with weight data and regeneration efficiency data. Such data may be transferred from the electric vehicle to the control unit by means of a wireless communication arrangement using a wireless data protocol (e.g. Wi-Fi, Zigbee, or the like).

According to at least one example embodiment, the control unit of the first charging station comprises data of the predetermined routes and the known topography of the predetermined routes.

According to at least one example embodiment, the control unit of the first charging station comprises the altitude data of the first charging station, and preferably the altitude data of any other charging station among the plurality of charging stations.

According to at least one example embodiment, the second charging station is the charging station among the plurality of charging stations being located closest to the first charging station.

The charging station being arranged closest (by road distance) to the first charging station, has a high likelihood of being the (next) charging station destination of the electric vehicle. Thus, the predicted battery regeneration and the predetermined charging level may be determined for a prediction of that the electric vehicle travel along the predetermined route from the first charging station to the closest charging station of the charging station system. As an alternative, the second charging station is the charging station among the plurality of charging stations which the driver of the electric vehicle has indicated being the next charging station destination. However, such alternative requires some input from the driver of the electric vehicle to the first charging station. As a further alternative, a destination of the electric vehicle may be provided by the driver, or a control unit of the electric vehicle, wherein the charging station being closest to the driver/vehicle-indicated destination is defined as the second charging station. Again, such alternative requires some input from the driver or of the electric vehicle to the first charging station. However, the complete route planning or scheduled destinations of the electric vehicle is not needed to be provided to the first charging station.

According to at least one example embodiment, the predetermined route between the first and the second charging stations is the route among a plurality of possible predetermined routes with the shortest distance.

The predetermined route with the shortest distance to the second charging station, has a high likelihood of being the most preferred route of the electric vehicle. Thus, the predicted battery regeneration and the predetermined charging level may be determined for a prediction of that the electric vehicle travel along the predetermined route from the first charging station to the second charging station being the shortest predetermined route. As an alternative, the predetermined route between the first and second charging stations is the route which the driver of the electric vehicle has indicated being the preferred or planned route. However, such alternative requires some input from the driver of the electric vehicle to the first charging station.

According to at least one example embodiment, the second charging station is the charging station among the plurality of charging stations which has the highest likelihood of being the (next) charging station destination of the electric vehicle. For example, the second charging station is a charging station among the plurality of charging stations which has a higher likelihood of being the (next) charging station destination than any other of the charging stations among the plurality of charging stations.

According to at least one example embodiment, the charging event is a first charging event and the predetermined charging level is a first predetermined charging level, the method further comprising:

- performing a second charging event of the battery of the electric vehicle using an external power source at the second charging station;
- stopping the charging event at a second predetermined charging level below the nominally fully charged level, the second predetermined charging level being set to correspond to the predicted battery regeneration when driving the electric vehicle along a predetermined route from the second charging station to a third charging station, wherein the predicted battery regeneration is determined by at least the known altitude of the second charging station, the known topography of the predetermined route between the second and third charging stations, the weight of the electric vehicle and the known regeneration efficiency of the electric vehicle.

Hereby, the electric vehicle may continue to travel in a preferred way along routes (predetermined routes) between charging stations in the charging station system. The second charging station may be configured in a corresponding manner as the first charging station. For example, the second charging station may comprise a corresponding control unit as the first charging station.

According to a second aspect of the invention, a charging station system is provided. The charging system comprises a plurality of charging stations separated by predetermined routes with known topography, each one of the charging stations being located at a known altitude above sea level and being configured to charge an electric vehicle having a known weight and a pre-determined regeneration efficiency, each charging station comprising an external power source configured to perform a charging event of a battery of the electric vehicle and to stop the charging event at a predetermined charging level below the nominally fully charged level, the predetermined charging level being set to correspond to the predicted battery regeneration when driving the electric vehicle along a predetermined route from the first charging station to a second charging station, wherein the predicted battery regeneration is determined by at least the known altitude of the first charging station, the known topography of the predetermined route between the first and second charging stations, the weight of the electric vehicle and the pre-determined regeneration efficiency of the electric vehicle.

According to a third aspect of the invention, a charging station of a charging station system including at least a secondary charging station being separated to the charging station by predetermined routes with known topography, is provided. The charging station is located at a known altitude above sea level and is configured to charge an electric vehicle having a known weight and a pre-determined regeneration efficiency. The charging station comprises an external power source configured to perform a charging event of a battery of the electric vehicle and to stop the charging event at a predetermined charging level below the nominally fully charged level, the predetermined charging level being set to correspond to the predicted battery regeneration when driving the electric vehicle along a predetermined route from the charging station to the secondary charging station, wherein the predicted battery regeneration is determined by at least the known altitude of the charging station, the known topography of the predetermined route between the charging station and the secondary charging station, the weight of the electric vehicle and the pre-determined regeneration efficiency of the electric vehicle.

Effects and features of the second and third aspects of the invention are largely analogous to those described above in connection with the first aspect of the invention. Embodiments mentioned in relation to the first aspect of the invention are largely compatible with the second and third aspect of the invention.

According to a fourth aspect of the invention, a computer program comprising instructions to cause the charging station of the third aspect of the invention, or any one of the charging stations of the charging station system of the second aspect of the invention, to execute the steps of the method of the first aspect of the invention, when the program is run on a computer, is provided.

According to a fifth aspect of the invention, a computer readable medium carrying a computer program comprising instructions to cause the charging station of the third aspect of the invention, or any one of the charging stations of the charging station system of the second aspect of the invention, to execute the steps of the method of the first aspect of the invention, when the computer program is run on a computer, is provided.

According to at least one example embodiment, applicable to any one of the first to fifth aspects of the invention, the electric vehicle comprises an electric machine wherein the battery is configured to power the electric machine. The battery is preferably a high voltage battery, e.g. having an operating voltage higher than 48 V. The electric vehicle may be a full electric vehicle or a hybrid. Thus, the electric machine is preferably a traction electric machine configured to at least partly contributing to propelling the vehicle. In other words, the electric machine is preferably coupled to a drive shaft, e.g. via a gear box, the drive shaft being configured to transfer motion to propelling means of the vehicle, such as the wheels. The electric vehicle is configured to be charged by the external power source at the first charging station. The first charging station may be connected to the grid, and the external power source may e.g. be a power cable, a power conducting means including a power transmitter configured to conductively transfer power to a power receiver on the electric vehicle, or a wireless charging arrangement such as e.g. an inductive charging means. For example, and according to at least one example embodiment, the first charging station comprises a movable arm comprising the external power source and being configured to move in order to contact a part of the electric vehicle such as e.g. the roof of the vehicle. Correspondingly, the electric vehicle may comprise a power receiver arranged on the roof of the electric vehicle and be arranged as e.g. a contact rail. Such charging configuration with a movable arm and roof-mounted contact rails may referred to as conductive static charging via a pantograph. By the charging, the battery configured to power the electric machine may be charged, e.g. using direct current.

According to at least one example embodiment, applicable to any one of the first to fifth aspects of the invention, the charging of the battery may be determined by the State-of-Charge, SoC, of the battery. SoC refers to the level of charge of the battery relative to its capacity. The units of SoC are typically in percentage points (0 % = empty; 100 % = full) Thus, the nominally fully charged level refers to a SoC of 100 % (or being rated to 100 %). The battery regeneration may be referred to as battery power regeneration.

Further advantages and features of the present disclosure are disclosed and discussed in the following description and the accompanying drawings.

BRIEF DESCRIPTION OF THE DRAWINGS

With reference to the appended drawings, below follows a more detailed description of embodiments of the invention cited as examples. In the drawings:

Fig. 1 is a schematic view of a charging station system comprising a plurality of charging stations, and an electric vehicle charging at a first charging station, in accordance with an example embodiment of the invention;
Fig. 2 is a schematic top view of the charging station system of Fig. 1, the charging station system of Fig. 2 showing more charging stations as compared to in Fig. 1, in accordance with example embodiments of the invention;
Fig. 3 is a schematic side view of at least a part of the charging station system of Figs. 1 and 2;
Fig. 4 is a graph representing the level of charge of the battery of the electric vehicle; and
Fig. 5 is a flowchart illustrating the steps of a method in accordance with example embodiments of the invention.

DETAILED DESCRIPTION OF EXAMPLE EMBODIMENTS OF THE INVENTION

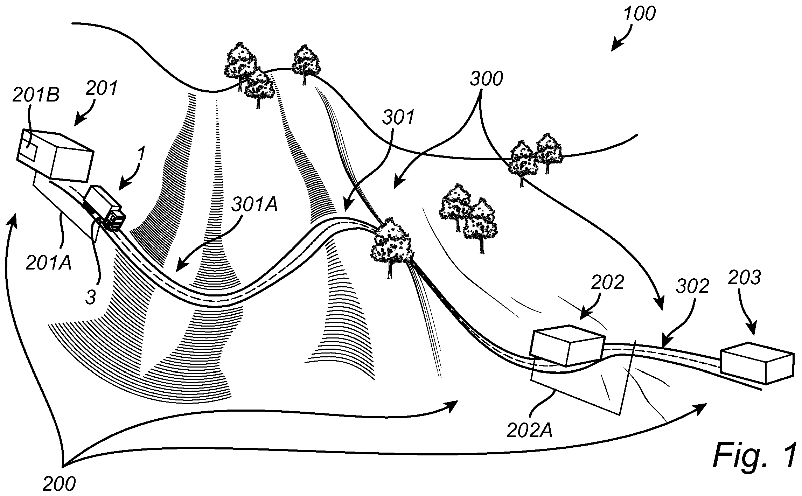

With reference to Fig. 1, a charging station system 100 comprising a plurality of charging stations 200 for charging a vehicle 1, here embodied as a heavy duty truck 1, is disclosed. However, the charging station system 100 may as well be used for other types of vehicles, such as busses, light-weight trucks, passenger cars, etc, which vehicles are in need of charging. The vehicle 1 is an electric vehicle, such as a full electric vehicle or a hybrid, comprising a battery 3 and a motor or engine (not shown), here referred to as an electric machine powered by the battery. The electric vehicle 1 is configured to be charged by the charging stations 200. In Fig. 1, the charging is achieved by means of corresponding external power sources 201A, 202A arranged on the charging stations 200 and being configured to transfer power from the grid to a power receiver of the electric vehicle 1. The charging may as well be achieved by a wireless charging system (not shown), such as an inductive charging system comprising a transmitting coil and a receiving coil of which one is arranged on the electric vehicle 1.

In Fig. 1, the plurality of charging stations 200 of the charging station system 100 is comprised of a first charging station 201, a second charging station 202 and a third charging station 203. The first, second and third charging stations 201, 202, 203 are separated by predetermined routes 300, here being a first route 301 between the first and second charging stations 201, 202 and a second route 302 between the second and third charging stations 202, 203. The first and second routes 301, 302 are predetermined with a known topography, e.g. as indicated for the first route 301 including a downhill portion 301A. Moreover, each one of the first, second and third charging stations 201, 202, 203 is located at a known altitude above sea level and is configured to charge the electric vehicle 1 as previously described. The electric vehicle 1 has a known weight and a pre-determined regeneration efficiency.

The electric vehicle 1 typically comprises a regenerative braking system of a known type. The regenerative braking system generally comprises a kinetic energy recovery system configured to transfer kinetic energy of an object in motion, i.e. the vehicle, into stored energy, i.e. charging of the battery, to slow the vehicle down. For example, the regenerative braking system comprises an electric generator, which preferably is the same component as the previously mentioned electric machine. Thus, the energy produced when slowing the vehicle down, typically by braking, is stored chemically in the battery (i.e. regenerative charging of the battery 3, or simply battery regeneration). The battery regeneration of the regenerative braking system is associated with a regeneration efficiency, i.e. how efficient the energy produced when slowing the vehicle down is stored in the battery 3, as previously described with reference to equation 1.

The first charging station 201 comprises an external power source 201A (or a first charging station external power source 201A) configured to charge the electric vehicle 1 by performing a first charging event of the battery 3. As shown in Fig. 1, the electric vehicle 1 is being charged by the external power source 201A of the first charging station 201 (e.g. by supplying power from the grid). Moreover, the second charging station 202 comprises an external power source 202A (or a second charging station external power source 202A) configured to charge the electric vehicle 1 by performing a second charging event of the battery 3. The first and second external power sources 201A, 202A are schematically shown in Fig. 1. As shown in Fig. 1, the electric vehicle 1 has not yet reached the second charging station 202, and is thus not (yet) being charged by the external power source 202A of the second charging station 202. Even though not explicitly shown, the third charging station 203 typically comprises a corresponding external power source configured to charge the electric vehicle 1 by performing a third charging event of the battery 3.

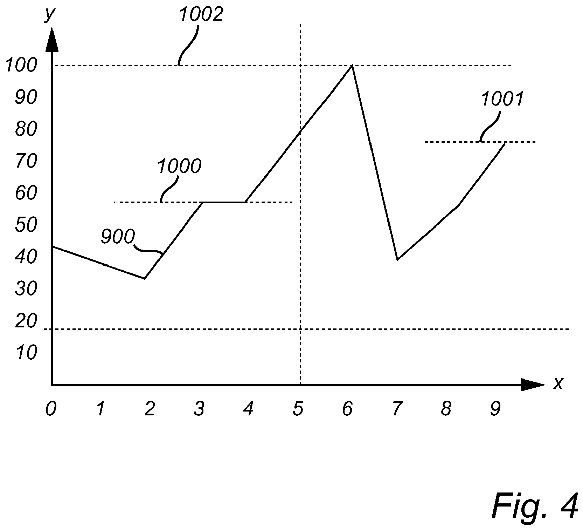

As shown in Fig. 1, the first charging station 201 may comprise a control unit 201B configured to control the charging of the electric vehicle 1. The control unit 201B is for example configured to stop the first charging event at the first charging station 201 at a predetermined charging level 1000 below the nominally fully charged level 1002, as shown in the graph of Fig. 4.

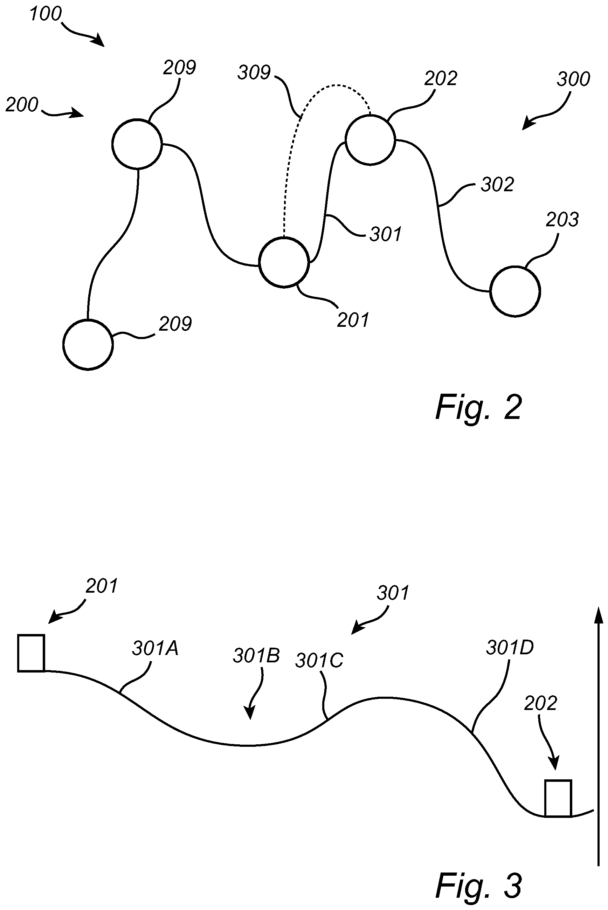

Fig. 4 is a graph representing the level of charge of the battery 3 on the y-axis, e.g. represented by the SoC of the battery 3, over time (x-axis). In Fig. 4, the various charging levels have been illustrated by dashed lines for simplicity, and may e.g. represent the charge level at the charging stations 200 subsequent to stopping the corresponding charging event but prior to that the electric vehicle drives away from the charging station. As the electric vehicle 1 travels between the charging stations 201, 202, 203, and along the predetermined routes 301, 302, the charge level of the battery 3 typically varies over time (being reduced as energy is drawn from the battery, and increased as regenerative energy is charged to the battery) as indicated by the solid line 900. This will now be described with reference to Figs. 3 and 4, wherein Fig. 3 is a schematic side view of a portion of Fig. 1, showing the first charging station 201, the second charging station 202 and the first route 301 between the first and second charging stations 201, 202.

The predetermined charging level 1000 is set, typically by the control unit 201B of the first charging station 201, to correspond to the predicted battery regeneration when driving the electric vehicle along the first route 301 from the first charging station 201 to the second charging station 202. The predicted battery regeneration is in turn determined by at least the known altitude of the first charging station 201, the known topography of the first route 301 between the first and second charging stations 201, 202, the weight of the electric vehicle 1 and a pre-determined regeneration efficiency of the electric vehicle 1. Thus, as the altitude of the first charging station 201 is known together with that the first route 301 between the first and second charging stations 201, 202 are predetermined, and with a known topography, the predicted battery regeneration can be determined in a straightforward manner simply using the weight of the vehicle and the regeneration efficiency, and there is no need, or a reduced need, to acquire sensitive data from the electric vehicle 1, such as route planning or scheduled destinations for determining the predicted battery regeneration. In Fig. 4, this is represented by that the electric vehicle 1 arrives at the first charging station 201 at time unit 2 having a SoC of approximately 30 %. From time unit 2 to time unit 3, the electric vehicle 1 is charged at the first charging station 201 to the predetermined charging level 1000 as previously described, here being a SoC of approximately 55 %. From time unit 3 to time unit 4, the electric vehicle is shut-off and no energy is drawn from the battery (hence the SoC is the constant, or approximately constant).

Subsequently to charging the battery 3 to the predetermined charging level 1000, the electric vehicle 1 drives to the second charging station 202 along the first route 301, which is schematically illustrated in Figs. 3 and 4. During travelling along the first route 301, the electric vehicle 1 is encountering a downhill portion 301A of the first route 301. During such downhill portion 301A, the battery regeneration is peaking, as the previously described regenerative braking system utilizes the energy produced when slowing the electric vehicle 1 down for charging the battery 3. Thus, depending on the charging level of the battery 3 when entering the downhill portion 301A, the charging level of the battery 3 may rise above the previously mentioned predetermined charging level 1000 and reach the nominally fully charged level 1002 at the end 301B of the downhill portion 301A. This is shown in Fig. 4 as an increase of the SoC from the predetermined charging level 1000 to the nominally fully charged level 1002 occurring between time period 4 and time period 6. Such position, or point along the first route 301, i.e. the end 301B of the downhill portion 301A, typically correspond to the most limiting battery regeneration of the battery 3. Thus, by predicting the battery regeneration when driving the electric vehicle 1 along the first route 301, and taking the most limiting battery regeneration of the battery 3 into account, the predetermined charging level 1000 can be set accordingly. For example, if the predetermined charging level 1000 would not be set to correspond to the predicted battery regeneration when driving the electric vehicle 1 along the first route 301 to the second charging station 201, or if the charging event at the first charging station 201 would simply be achieved to reach the nominally fully charged level 1002 of the battery 3, another means for disposing the regenerative energy would need to be used, e.g. by transforming the energy into heat in a resistor. In the embodiment of Fig. 4, the SoC decreases after reaching the nominally fully charged level 1002 at time unit 6, and keep decreasing until time unit 7. This may e.g. be the result of an uphill portion 301C of the first route 301 indicated in Fig. 3. Thereafter, between time unit 7 and 8, the SoC increases up to time unit 8, being the result of the battery regeneration. However, here, the battery regeneration is not sufficient to reach the nominally fully charged level 1002. This may e.g. be the result of the last downhill portion 301D of the first route 301 prior the second charging station 202 indicated in Fig. 3.

As the electric vehicle 1 reaches the second charging station 202, the same or corresponding procedure as for charging the electric vehicle 1 at the first charging station 201 may be carried out. Thus, the second charging station 202 may control the charging of the electric vehicle 1 by performing a second charging event and stopping the second charging event at the second charging station 202, e.g. by means of a corresponding control unit (not shown). Thus the predetermined charging level 1000 may be referred to as a first predetermined charging level 1000, and the stopping of the second charging event at the second charging station 202 may be done at a second predetermined charging level 1001 below the nominally fully charged level 1002, as also shown in Fig. 4. Correspondingly, the second predetermined charging level 1001 is set to correspond to the predicted battery regeneration when driving the electric vehicle 1 along the second route 302 from the second charging station 202 to the third charging station 203. Thus, the predicted battery regeneration is here determined by at least the known altitude of the second charging station 202, the known topography of the second route 302 between the second and third charging stations 202, 203, the weight of the electric vehicle 1 and the known regeneration efficiency of the electric vehicle 1. In Fig. 4, this is represented by that the electric vehicle 1 arrives at the second charging station 202 at time unit 8 having a SoC of approximately 55 %. From time unit 8 to time unit 9, the electric vehicle 1 is charged at the second charging station 202 to the second predetermined charging level 1001 as previously described, here being a SoC of approximately 75 %.

In Fig. 2, the charging station system 100 of Fig. 1 is schematically shown from above. Here, the first, second and third charging stations 201, 202, 203 and the corresponding predetermined first and second routes 301, 302 are shown. Moreover additional charging stations 209 of the charging station system 100 are shown. As seen in Fig. 2, the second charging station 202 is the charging station among the plurality of charging stations 200 which is arranged closest to the first charging station 201. Thus, if no particular preferences prevail, the second charging station 202 is the charging station with the highest likelihood of being the (next) charging station destination. Moreover, as schematically illustrated in Fig. 2, the first charging station 201 and the second charging station 202 may be separated by an alternative (predetermined) route 309 to the first route 301. The alternative route 309 is longer than the first route 301. Again, if no particular preferences prevail, the preferred route between the first and the second charging stations 201, 202 is the route among a plurality of possible predetermined routes 301, 309 with the shortest distance, here being the first route 301.

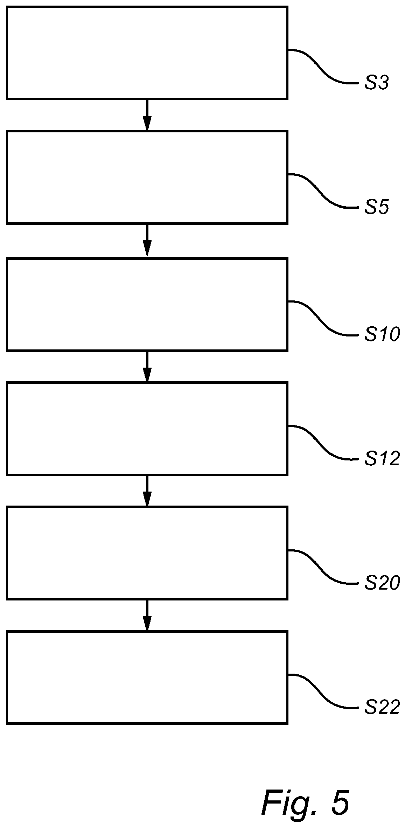

The invention will now be described with reference to the flow chart of Fig. 5, describing the steps of a method for charging an electric vehicle in a charging station system comprising a plurality of charging stations separated by predetermined routes with known topography. For example, the charging station system 100 as described with reference to Figs. 1-3 could be used in the method. Each one of the charging stations in the charging station system is located at a known altitude above sea level, and the electric vehicle has a known weight and a pre-determined regeneration efficiency.

In a first step, S10, a charging event of a battery of the electric vehicle using an external power source at a first charging station is performed.

In a second step S12, the charging event of the first step S10 is stopped at a predetermined charging level below the nominally fully charged level. The predetermined charging level is set to correspond to the predicted battery regeneration when driving the electric vehicle along a predetermined route from the first charging station to a second charging station, e.g. the predetermined charging level 1000 and the first route 301 between the first and second charging stations 201, 202 as described with reference to Figs. 1-4. The predicted battery regeneration is determined by at least the known altitude of the first charging station, the known topography of the predetermined route between the first and second charging stations, the weight of the electric vehicle and the pre-determined regeneration efficiency of the electric vehicle.

The predetermined charging level is preferably determined off-board the electric vehicle, e.g. by means of a control unit at the first charging station, as described with reference to Fig. 1. The second charging station is typically the charging station among the plurality of charging stations in the charging station system that is located closest to the first charging station. The predetermined route between the first and the second charging stations is preferably the route among a plurality of possible predetermined routes with the shortest distance.

The predicted battery regeneration may e.g. be determined in an optional step S5, occurring prior to the first step S10 of performing a charging event of the vehicle. The step S5 may comprise determining the predicted battery regeneration as the most limiting battery regeneration of the battery of the electric vehicle occurring somewhere along the predetermined route between the first and second charging stations. Such most limiting battery regeneration of the battery may be associated with, or be determined to, a position of, or point along the predetermined route at which the battery of the electric vehicle is predicted to be nominally fully charged. For example, a position of the predetermined route, or point along the predetermined route, at which the battery of the electric vehicle is predicted to be nominally fully charged for the first time after the second step S12 of stopping the charging event.

In an optional step S3, e.g. occurring prior to step S5 of determining the predicted battery regeneration, the weight and the pre-determined regeneration efficiency of the electric vehicle is retrieved. This is preferably carried out by means of the previously mentioned control unit of the first charging station.

The charging event of S10 may be referred to as a first charging event and the predetermined charging level referred to as a first predetermined charging level. Moreover, in a third step S20, a second charging event of the battery of the electric vehicle may be performed using an external power source at the second charging station. The second charging event in the third step S20 may be performed in a corresponding manner as the first charging event in the first step S10.

In a fourth step S22, the second charging event is stopped at a second predetermined charging level below the nominally fully charged level. Correspondingly to the first predetermined charging level, the second predetermined charging level is set to correspond to the predicted battery regeneration when driving the electric vehicle along a predetermined route from the second charging station to a third charging station, e.g. the predetermined charging level 1000 and the second route 302 between the second and third charging stations 202, 203 as described with reference to Figs. 1-4. The second predetermined charging level may be higher or lower than the first predetermined charging level. Correspondingly to the first predetermined charging level, the predicted battery regeneration is determined by at least the known altitude of the second charging station, the known topography of the predetermined route between the second and third charging stations, the weight of the electric vehicle and the known regeneration efficiency of the electric vehicle.

It is to be understood that the present invention is not limited to the embodiments described above and illustrated in the drawings; rather, the skilled person will recognize that many changes and modifications may be made within the scope of the appended claims.

Additionally, variations to the disclosed embodiments can be understood and effected by the skilled person in practicing the claimed inventive concept, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A method for charging an electric vehicle (1) in a charging station system (100) comprising a plurality of charging stations (200, 201, 202, 203) separated by predetermined routes (300, 301, 302) with known topography, each one of the charging stations (200, 201, 202, 203) being located at a known altitude above sea level, the electric vehicle (1) having a known weight and a pre-determined regeneration efficiency, the method comprising:

   - performing (S10) a charging event of a battery (3) of the electric vehicle (1) using an external power source (201A) at a first charging station (201);
   - stopping (S12) the charging event at a predetermined charging level (1000) below the nominally fully charged level (1002), the predetermined charging level (1000) being set to correspond to the predicted battery regeneration when driving the electric vehicle along a predetermined route (301) from the first charging station (201) to a second charging station (202), wherein the predicted battery regeneration is determined (S5) by at least the known altitude of the first charging station (201), the known topography of the predetermined route (301) between the first and second charging stations (201, 202), the weight of the electric vehicle (1) and the predetermined regeneration efficiency of the electric vehicle (1).

2. The method according to claim 1, wherein the predicted battery regeneration is determined as the most limiting battery regeneration of the battery (3) of the electric vehicle (1) occurring somewhere along the predetermined route (301) between the first and second charging stations (201, 202).

3. The method according to claim 2, wherein the most limiting battery regeneration of the battery (3) of the electric vehicle (1) along the predetermined route (301) between the first and second charging stations (201, 202) is determined to a point (301B) along the predetermined route (301) at which the battery (3) of the electric vehicle (1) is predicted to be nominally fully charged.

4. The method according to any one of the preceding claims, wherein the predetermined charging level (1000) is determined off-board the electric vehicle (1).

5. The method according to claim 4, wherein the predetermined charging level (1000) is determined by a control unit (201B) at the first charging station (201).

6. The method according to claim 5, further comprising:

   - retrieving the weight and the pre-determined regeneration efficiency of the electric vehicle (1), by the control unit (201B) of the charging station (201).

7. The method according to any one of the preceding claims, wherein the second charging station (202) is the charging station among the plurality of charging stations (200) being located closest to the first charging station (201).

8. The method according to claim 7, wherein the predetermined route (301) between the first and the second charging stations (201, 202) is the route among a plurality of possible predetermined routes with the shortest distance.

9. The method according to any one of the preceding claims, wherein the charging event is a first charging event and the predetermined charging level (1000) is a first predetermined charging level (1000), the method further comprising:

   - performing (S20) a second charging event of the battery (3) of the electric vehicle (1) using an external power source (202A) at the second charging station (202);
   - stopping (S22) the second charging event at a second predetermined charging level (1001) below the nominally fully charged level (1002), the second predetermined charging level (1001) being set to correspond to the predicted battery regeneration when driving the electric vehicle along a predetermined route (302) from the second charging station (202) to a third charging station (203), wherein the predicted battery regeneration is determined by at least the known altitude of the second charging station (202), the known topography of the predetermined route (302) between the second and third charging stations (202, 203), the weight of the electric vehicle (1) and the known regeneration efficiency of the electric vehicle (1).

10. A charging station system (100) comprising a plurality of charging stations (200, 201, 202, 203) separated by predetermined routes (300, 301, 302) with known topography, each one of the charging stations (200, 201, 202, 203) being located at a known altitude above sea level and being configured to charge an electric vehicle (1) having a known weight and a pre-determined regeneration efficiency, each charging station comprising an external power source (201A) configured to perform a charging event of a battery (3) of the electric vehicle (1) and to stop the charging event at a predetermined charging level (1000) below the nominally fully charged level (1002), the predetermined charging level (1000) being set to correspond to the predicted battery regeneration when driving the electric vehicle along a predetermined route (301) from the first charging station (201) to a second charging station (202), wherein the predicted battery regeneration is determined by at least the known altitude of the first charging station (201), the known topography of the predetermined route (301) between the first and second charging stations (201, 202), the weight of the electric vehicle (1) and the pre-determined regeneration efficiency of the electric vehicle (1).

11. A charging station (201) of a charging station system (100) including at least a secondary charging station (202, 203) being separated to the charging station (201) by predetermined routes (300, 301, 302) with known topography, the charging station (201) being located at a known altitude above sea level and being configured to charge an electric vehicle (1) having a known weight and a pre-determined regeneration efficiency, the charging station (201) comprising an external power source (201A) configured to perform a charging event of a battery (3) of the electric vehicle (1) and to stop the charging event at a predetermined charging level (1000) below the nominally fully charged level (1002), the predetermined charging level (1000) being set to correspond to the predicted battery regeneration when driving the electric vehicle along a predetermined route (301) from the charging station (201) to the secondary charging station (202), wherein the predicted battery regeneration is determined by at least the known altitude of the charging station (201), the known topography of the predetermined route (301) between the charging station (201) and the secondary charging station (202, 203), the weight of the electric vehicle (1) and the pre-determined regeneration efficiency of the electric vehicle (1).

12. A computer program comprising instructions to cause the charging station (201) of claim 11, or any one of the charging stations (200, 201, 202, 203) of the charging station system (100) of claim 10, to execute the steps of the method of any one of claims 1 to 9, when the program is run on a computer.

13. A computer readable medium carrying a computer program comprising instructions to cause the charging station (201) of claim 11, or any one of the charging stations (200, 201, 202, 203) of the charging station system (100) of claim 10, to execute the steps of any one of claims 1 to 9, when the computer program is run on a computer.

Fig. 1

EP 4 299 358 A1

Fig. 2

Fig. 3

Fig. 4

Fig. 5

Europäisches
Patentamt

European
Patent Office

Office européen
des brevets

# EUROPEAN SEARCH REPORT

Application Number

EP 22 18 1756

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/001834 A1 (KIM JINYONG [KR]) 7 January 2021 (2021-01-07) * figures 1-10 * * paragraphs [0002] - [0008], [0259] - [0301] * ----- | 1-13 | INV. B60L7/10 B60L53/67 B60L58/15 |
| X | US 2021/061120 A1 (PARK DAE RO [KR] ET AL) 4 March 2021 (2021-03-04) * figures 1-7 * * paragraphs [0002] - [0010], [0044] - [0158] * ----- | 1-13 | |
| X | US 2020/171970 A1 (LEE JEA MUN [KR]) 4 June 2020 (2020-06-04) * figures 1,6-8 * * paragraphs [0040] - [0063] * ----- | 1-13 | |
| X | JP 2020 178428 A (MITSUBISHI MOTORS CORP) 29 October 2020 (2020-10-29) * figures 1,2,4,6,7 * * paragraphs [0001] - [0003], [0026] - [0044] * ----- | 1-13 | TECHNICAL FIELDS SEARCHED (IPC) B60L |
| A | US 2021/001746 A1 (SHIN JIN CHEOL [KR] ET AL) 7 January 2021 (2021-01-07) * figures 1-5 * * paragraphs [0043] - [0103] * ----- | 1-13 | |

The present search report has been drawn up for all claims

| Place of search | Date of completion of the search | Examiner |
|---|---|---|
| The Hague | 13 December 2022 | Gücin, Taha |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

..............................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 22 18 1756

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2022

| Patent document cited in search report | | Publication date | Patent family member(s) | | Publication date |
|---|---|---|---|---|---|
| US 2021001834 | A1 | 07-01-2021 | CN | 112172589 A | 05-01-2021 |
| | | | KR | 20210005438 A | 14-01-2021 |
| | | | US | 2021001834 A1 | 07-01-2021 |
| US 2021061120 | A1 | 04-03-2021 | KR | 20210026400 A | 10-03-2021 |
| | | | US | 2021061120 A1 | 04-03-2021 |
| US 2020171970 | A1 | 04-06-2020 | KR | 20200067302 A | 12-06-2020 |
| | | | US | 2020171970 A1 | 04-06-2020 |
| JP 2020178428 | A | 29-10-2020 | NONE | | |
| US 2021001746 | A1 | 07-01-2021 | CN | 112172603 A | 05-01-2021 |
| | | | DE | 102019218370 A1 | 07-01-2021 |
| | | | KR | 20210002908 A | 11-01-2021 |
| | | | US | 2021001746 A1 | 07-01-2021 |

EPO FORM P0459

For more details about this annex : see Official Journal of the European Patent Office, No. 12/82